# FASCICULE DE BREVET EUROPEEN

(11) **EP 3 326 027 B1**
(45) Date de publication et mention de la délivrance du brevet: **29.01.2020**
(21) Numéro de dépôt: 16742262.5
(22) Date de dépôt: 20.07.2016
(51) Int. Cl.: G02F 1/015, G02B 5/20

(54) **FILTRE ET DETECTEUR OPTIQUES A NANOPARTICULES OU MICROPARTICULES RESONANTES.**
OPTISCHES FILTER BEZIEHUNGSWEISE DETEKTOR MIT RESONANZ-NANOTEILCHEN ODER MICROTEILCHEN
OPTICAL FILTER AND DETECTOR WITH RESONATING NANOPARTICULES OR MICROPARTICLES

(30) Priorité: 20.07.2015 FR 1556864
(43) Date de publication de la demande: 30.05.2018
(73) Titulaire: Centre National de la Recherche Scientifique, 75016 Paris (FR); Université d'Aix Marseille, 13284 Marseille Cedex 07 (FR); Ecole Centrale de Marseille, 13013 Marseille 13 (FR)
(72) Inventeur: BONOD, Nicolas, 83250 La Londe les Maures (FR); ABBARCHI, Marco, 13001 Marseille (FR); WOOD, Thomas Michael, 13005 Marseille (FR)
(74) Mandataire: Joubert, Cécile
(86) Numéro de dépôt international: PCT/EP2016/067341
(87) Numéro de publication internationale: WO 2017/013189

(56) Documents cités:
- WO-A1-2013/062795
- WO-A2-2004/053938
- MARCO ABBARCHI ET AL: "Wafer Scale Formation of Monocrystalline Silicon-Based Mie Resonators via Silicon-on-Insulator Dewetting", ACS NANO, vol. 8, no. 11, 25 novembre 2014 (2014-11-25), pages 11181-11190, XP055270747, US ISSN: 1936-0851, DOI: 10.1021/nn505632b cité dans la demande

## Description

L'invention concerne des composants photoniques et opto-électroniques et plus particulièrement un filtre et un détecteur optique à base de nano-/microparticules.

Les systèmes d'imagerie en couleurs nécessitent des filtres disposés sur des matrices de capteurs. Ces filtres sont typiquement des filtres absorbants qui transmettent une ou des longueurs d'onde définies. Ils sont généralement fabriqués en utilisant des colorants : l'absorption d'une lumière incidente est réalisée par les molécules qui composent les colorants. Cette méthode de filtrage de la lumière comporte plusieurs inconvénients : la capacité de filtrage est sujette au vieillissement et les matériaux utilisés ne sont pas compatibles avec les procédés de fabrication des capteurs lumineux CMOS.

Abbarchi *et al.* (Abbarchi, M., Naffouti, M., Vial, B., Benkouider, A., Lermusiaux, L., Favre, L., ... & Bonod, N., 2014, Wafer Scale Formation of Monocrystalline Silicon-Based Mie Resonators via Silicon-on-Insulator Dewetting. ACS nano, 8(11), 11181-11190) ont divulgué une méthode de fabrication d'un filtre basé sur la résonance de nano-/microparticules semi-conductrices, permettant de diffuser efficacement la lumière incidente à la surface d'un composant par résonance électromagnétique dans le matériau de la nano-/microparticule. Leurs fréquences de résonance dépendent de la taille et du matériau utilisé. Pour réaliser ces résonateurs, Abbarchi *et al.* utilisent un substrat de silicium sur isolant sur lequel peut être déposé une couche de germanium. Des conditions contrôlées de pression et de température induisent un démouillage de la (des) couche(s) semi-conductrice(s) sur la couche de SiO₂. Les « gouttes » de semi-conducteur (silicium et/ou germanium) forment des nano-/microparticules sur la surface de l'isolant. Cette méthode présente l'intérêt d'être compatible avec les critères de fabrication CMOS car elle n'utilise pas, notamment, de métal, contrairement aux méthodes utilisant des microstructures mettant en œuvre des plasmons de surface. En revanche, la méthode divulguée ne permet pas de contrôler *a posteriori* la fréquence de résonance des nano-/microparticules fabriquées car la taille et le matériau de ces particules sont fixés lors de la fabrication. Les documents WO2013/062795 A1 et WO2004/053938 A2 divulguent des filtres accordables électriquement.

L'invention concerne également un photodétecteur. Les systèmes d'imagerie comportent généralement une matrice de photodétecteurs, par exemple de type CMOS ou jonction p-n, dont la bande spectrale de chacun des photodétecteurs est fixe. L'imagerie en couleur nécessite la détection indépendante de plusieurs bandes spectrales : des photodétecteurs d'une même matrice doivent alors comporter des filtres de bandes spectrales différentes. Les photodétecteurs réalisés de cette manière ne sont pas accordables *a posteriori* et leur fabrication nécessite des étapes technologiques additionnelles qui ne sont pas compatibles avec les critères de fabrication CMOS.

L'invention vise à surmonter, complètement ou partiellement, au moins l'un des inconvénients précités de l'art antérieur.

Un objet de l'invention permettant d'atteindre ce but est un filtre optique électriquement accordable selon la revendication 1 et comprenant notamment:
- une pluralité de nano-/microparticules semi-conductrices, présentant des propriétés de résonance électromagnétique dans le domaine optique et proche infrarouge, agencées sur un plan, caractérisé en ce qu'il comprend en outre :
   - une couche à indice optique électriquement ajustable disposée sur la surface formée par lesdites nano-/microparticules et ledit plan;
   - une première couche électriquement isolante disposée sur ladite couche à indice optique électriquement ajustable et
   - une électrode disposée sur ladite première couche électriquement isolante.

Avantageusement, le filtre comprend une seconde couche électriquement isolante dont une face coïncide avec ledit plan, ladite seconde couche électriquement isolante étant en contact avec desdites nano-/microparticules et la couche à indice optique électriquement ajustable.

Avantageusement, au moins une dite nano-/microparticule dudit filtre comporte un cœur semi-conducteur et une coquille semi-conductrice dont les propriétés électriques sont différentes et adaptées à former au moins une jonction choisie parmi une homojonction anisotype, une hétérojonction isotype et une hétérojonction anisotype.

Avantageusement, le filtre comporte au moins une coquille de matériau électriquement isolant dans lequel au moins une dite nano-/microparticule est entourée, au moins partiellement, d'une dite coquille de matériau électriquement isolant.

Avantageusement, au moins un matériau de ladite couche à indice optique électriquement ajustable dudit filtre est un matériau organique.

Avantageusement, le matériau de ladite couche à indice optique électriquement ajustable dudit filtre est choisi au moins parmi le poly(3,4-éthylènedioxythiophène), le polystyrène sulfonate de sodium, l'oxyde d'indium-étain, l'oxyde de zinc-aluminium, le poly(4,4-dioctylcyclopentadithiophene), le poly(methyl methacrylate) et des réseaux de nanotubes de carbone.

Avantageusement, la taille et le matériau desdites nano-/microparticules dudit filtre sont adaptés à permettre une résonance desdites nano-/microparticules pour des longueurs d'onde d'excitation comprises entre 300 nm et 2,5 µm.

Comme revendiqué, le filtre comprend un premier circuit électrique connecté d'une part à une masse et d'autre part à ladite électrode, adapté à la polarisation de ladite couche à indice optique électriquement ajustable.

Avantageusement, l'indice optique du matériau de ladite seconde couche électriquement isolante est strictement inférieur à l'indice optique du matériau desdites nano-/microparticules et lesdites nano-/microparticules sont sensiblement hémisphériques, la partie plane des hémisphères formés par lesdites nano-/microparticules coïncidant avec ledit plan.

Un autre objet de l'invention est une matrice de dits filtres selon la revendication 11.

Avantageusement, au moins deux dits premiers circuits de la matrice de filtres sont connectés de manière à imposer le même potentiel entre ladite masse et chaque dite électrode.

Avantageusement, au moins un dit premier circuit électrique de ladite matrice de filtres optiques est adapté à imposer un potentiel indépendant desdits autres premiers circuits électriques, à au moins une dite électrode.

Un autre objet de l'invention est un photodétecteur à jonction p-n, selon la revendication 14 et comportant un filtre disposé sur une couche choisie parmi une couche dopée n et une couche dopée p de ladite jonction p-n.

Avantageusement, le photodétecteur comprend un dit filtre optique, dont le matériau de ladite couche à indice optique électriquement ajustable est conducteur.

Avantageusement, le photodétecteur comprend un second circuit électrique, dont deux bornes sont connectées à ladite couche à indice électriquement ajustable, ledit second circuit électrique étant adapté à détecter des variations de courant électrique aux dites bornes.

Un autre objet de l'invention est une matrice de dits photodétecteurs.

Avantageusement, au moins deux dits premiers circuits de la dite matrice de photodétecteurs sont connectés de manière à imposer le même potentiel entre ladite masse et chaque dite électrode.

Avantageusement, au moins un dit premier circuit électrique de ladite matrice de photodétecteurs est adapté à imposer un potentiel indépendant desdits autres premiers circuits électriques, à au moins une dite électrode.

Un autre objet de l'invention est un procédé de fabrication selon la revendication 20 d'un filtre optique, d'un photodétecteur, d'une matrice de filtres optiques et/ou d'une matrice de photodétecteurs comportant au moins les étapes suivantes :
a) démouillage d'au moins une couche de matériau semi-conducteur préalablement déposée sur une dite seconde couche électriquement isolante;
b) dépôt d'une dite couche à indice optique électriquement ajustable sur lesdits matériaux semi-conducteurs et isolant.

Avantageusement, le procédé comporte une étape initiale consistant à graver des motifs sur ladite couche d'au moins un dit matériau semi-conducteur, lesdits motifs contrôlant spatialement la formation de dites nano-/microparticules lors de l'étape a).

Avantageusement, on grave, dans le procédé, au moins une dite couche de matériau semi-conducteur avec une sonde ionique focalisée.

Avantageusement, le procédé comprend une étape consistant à graver au moins ladite couche à indice électriquement ajustable de manière à définir spatialement le(s)dit(s) filtre(s) optique(s), photodétecteur(s), matrice(s) de filtres optiques et/ou d'une matrice(s) de photodétecteurs.

Un autre objet de l'invention est un procédé de filtrage optique par d'un filtre optique, un photodétecteur, une matrice de filtres optiques et/ou une matrice de photodétecteurs, ledit procédé comportant au moins une étape consistant à ajuster la longueur d'onde de résonance desdites nano-/microparticules en pilotant le potentiel à la borne de ladite électrode.

La description suivante présente plusieurs exemples de réalisation du dispositif de l'invention : ces exemples ne sont pas limitatifs de la portée de l'invention. Ces exemples de réalisation présentent à la fois les caractéristiques essentielles de l'invention ainsi que des caractéristiques additionnelles liées aux modes de réalisation considérés. Par souci de clarté, les mêmes éléments porteront les mêmes repères dans les différentes figures.

Par « nanoparticule », on entend une particule dont au moins la plus petite des dimensions est nanométrique, c'est-à-dire comprise entre 0,1 nm et 100 nm.

Par « microparticule », on entend une particule dont au moins la plus petite des dimensions est micrométrique, c'est-à-dire comprise entre 0,1 µm et 100 µm.

Par « pixel », on entend au moins un élément choisi parmi un filtre et un photodétecteur d'une matrice dudit élément.

L'invention sera mieux comprise et d'autres avantages, détails et caractéristiques de celle-ci apparaîtront au cours de la description explicative qui suit, faite à titre d'exemple en référence aux dessins annexés dans lesquels:
- la figure 1 est une photographie obtenue au moyen d'un microscope à balayage électronique d'une galette de silicium sur isolant, en vue de dessus, après la formation de nano-/microparticules ;
- la figure 2 est une photographie obtenue au moyen d'un microscope à balayage électronique haute résolution, en vue de dessus, d'une nano-/microparticule ;
- la figure 3 est une photographie obtenue au moyen d'un microscope électronique en transmission de la coupe d'une nano-/microparticule ;
- la figure 4 est une photographie obtenue au moyen d'un microscope électronique en transmission de la coupe d'une nano-/microparticule ;
- la figure 5 illustre la correspondance entre différents motifs de gravure et la distribution spatiale des nano-/microparticules sur la couche d'isolant ;
- la figure 6 est un montage composé d'une image en microscopie optique de réseaux de nano-/microparticules et de trois images en microscopie AFM indiquant des détails de ces réseaux ;
- la figure 7 illustre les résonances électromagnétiques des nano-/microparticules ;
- la figure 8 illustre schématiquement un filtre optique selon une réalisation de l'invention et une matrice de filtres optiques selon une réalisation de l'invention ;
- la figure 9 illustre l'ajustement de la fréquence de résonance des nano-/microparticules par imposition d'un potentiel à la couche à indice optique électriquement ajustable ;
- la figure 10 illustre schématiquement une matrice de filtres et de photodétecteurs selon des réalisations de l'invention ;
- la figure 11 illustre schématiquement une matrice de filtres et de photodétecteurs selon des réalisations de l'invention ;
- la figure 12 illustre une matrice de trois photodétecteurs selon des réalisations de l'invention ;
- la figure 13 illustre une matrice de trois photodétecteurs selon des réalisations de l'invention 15 ;
- la figure 14 illustre une simulation de la transmission optique d'un filtre selon l'invention, en fonction de différents indices optiques d'un couche à indice optique électriquement ajustable et
- la figure 15 illustre des simulations de la transmission optique d'un filtre différent de l'invention, en fonction de la longueur d'onde d'excitation du filtre.

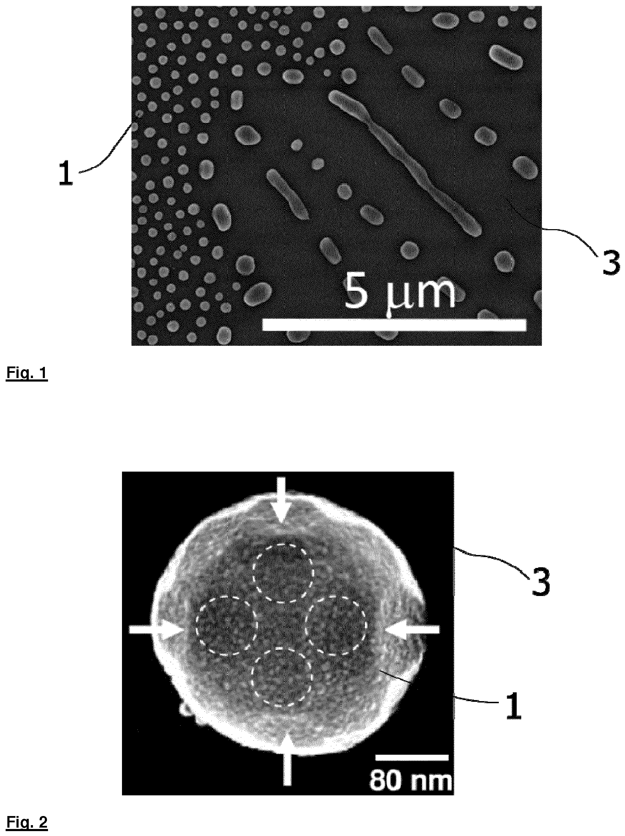

La figure 1 est une photographie obtenue au moyen d'un microscope à balayage électronique d'une galette de silicium sur isolant (SOI), en vue de dessus, après la formation de nano-/microparticules 1. Avantageusement, la méthode décrite par Abbarchi *et al.* peut être utilisée pour réaliser le réseau de nano-/microparticules illustré par la figure 1. Une galette de silicium sur isolant est utilisée. Après un nettoyage des galettes de SOI, la couche d'oxyde natif du silicium peut être éliminée par gravure humide. Une couche épitaxiale de germanium peut être déposée sur la couche de silicium de la galette (on peut par exemple déposer 18 monocouches de germanium). L'échantillon est cuit, par exemple entre 750 et 880°C sous vide poussé, par exemple entre 10⁻⁸ et 10⁻¹⁰ Torr, pendant, par exemple, 30 à 120 minutes. Ces conditions mènent au démouillage des couches semi-conductrices sur l'isolant 3. Dans la figure 1, la galette de SOI utilisée est caractérisée par une épaisseur d'isolant (SiO₂) de 25 nm et une épaisseur de silicium de 12 nm avant démouillage. La photographie de la figure 1 illustre la formation de nano-/microparticules 1 formées par démouillage de la couche de silicium et de la couche de germanium par ce procédé.

D'autre méthodes de réalisation de nano-/microparticules 1 semi-conductrices peuvent être utilisées. Par exemple, Proust *et al.* (Proust, J., Bedu, F., Chenot, S., Soumahoro, I., Ozerov, I., Gallas, B., ... & Bonod, N., 2015, Chemical Alkaline Etching of Silicon Mie Particles, Advanced Optical Materials) divulguent une méthode de lithographie chimique sélective pour des couches épaisses (par exemple 100 nm) de silicium sur isolant. On peut aussi utiliser l'auto-assemblage colloïdale (Garín, M., Fenollosa, R., Alcubilla, R., Shi, L., Marsal, L. F., & Meseguer, F., 2014, All-silicon spherical-Mie-resonator photodiode with spectral response in the infrared région. Nature communications, 5), l'impression nanométrique combinée à la gravure ionique (Spinelli, P., Verschuuren, M. A., & Polman, A., 2012, Broadband omnidirectional antireflection coating based on subwavelength surface Mie resonators, Nature communications, 3, 692) ou l'ablation laser (Kuznetsov, A. I., Miroshnichenko, A. E., Fu, Y. H., Zhang, J., & Luk'yanchuk, B., 2012, Magnetic light. Scientific reports, 2).

La figure 2 est une photographie obtenue au moyen d'un microscope à balayage électronique à haute résolution, en vue de dessus, d'une nano-/microparticule 1. Cette nano-/microparticule 1 est réalisée selon la méthode décrite dans la figure 1. Certaines des faces correspondant aux plans cristallographiques (311) sont indiquées par les cercles blancs en pointillés et par les flèches blanches. De manière générale, la méthode décrite dans la figure 1 et la méthode décrite par Proust *et al.* permettent avantageusement la fabrication de nano-/microparticules 1 dont la structure est cristalline. En particulier, une nano-/microparticule 1 comportant une surface atomiquement lisse permet de minimiser les états électroniques de surface. Des défauts sur la surface de ces nano-/microparticules peuvent entraîner des pertes de charge significatives, par exemple par recombinaisons. En variante, les nano-/microparticules 1 peuvent être dans réalisées avec un matériau diélectrique.

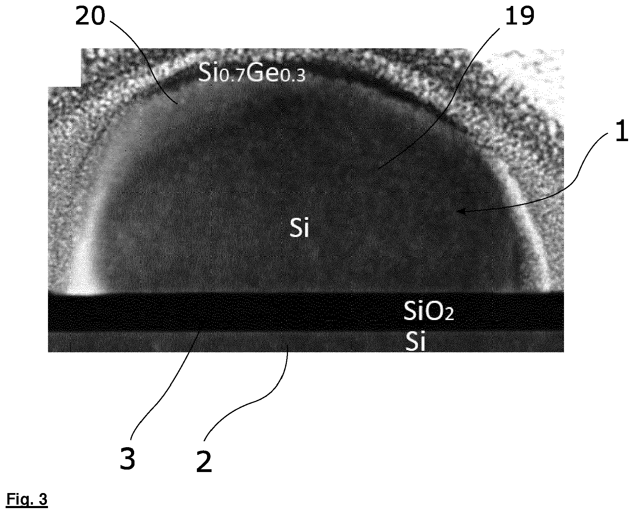

La figure 3 est une photographie obtenue au moyen d'un microscope électronique en transmission de la coupe d'une nano-/microparticule 1. Cette nano-/microparticule est réalisée selon la méthode décrite dans la figure 1. Le cœur semi-conducteur 19 de la particule 1 est en silicium tandis que sa coquille semi-conductrice 20 est en alliage Si_{0.7}Ge_{0.3}. La formation d'une coquille est possible grâce à la superposition des couches de silicium et de germanium préalable au démouillage. D'une manière plus générale, les nano-microparticules 1 des réalisations de l'invention peuvent comporter un cœur semi-conducteur 19 et une coquille semi-conductrice 20 dont les propriétés électriques sont différentes et adaptées à former au moins une jonction électrique choisie parmi une homojonction anisotype, une hétérojonction isotype et une hétérojonction anisotype.

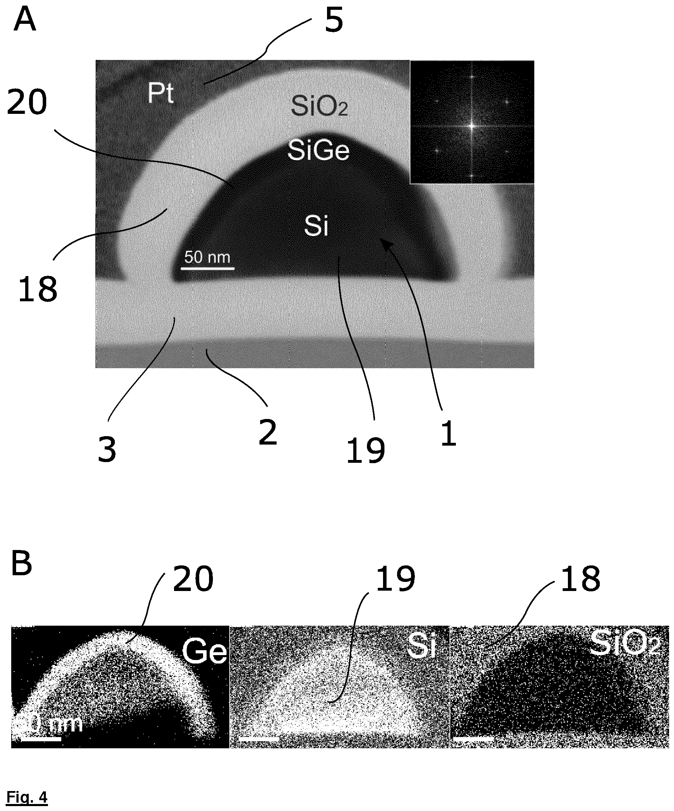

La figure 4 illustre la structure d'une nano-microparticule 1. Le panneau A de la figure 4 est une photographie obtenue au moyen d'un microscope électronique en transmission de la coupe d'une nano-/microparticule 1. Dans cette réalisation de l'invention, la nano-/microparticule 1 comporte un cœur semi-conducteur 19 en silicium et une coquille semi-conductrice 20 en alliage de silicium et de germanium. La nano-/microparticule 1 est entourée de matériau isolant, en l'occurrence de dioxyde de silicium : sur sa face inférieure par une seconde couche électriquement isolante 3 et sur sa surface supérieure par une coquille partielle de matériau électriquement isolant 18. Dans des réalisations de l'invention, comprenant la réalisation décrite dans la figure 4, une jonction MIS (acronyme de *Métal Insulator Semiconductor*) est réalisée : le matériau de la couche à indice optique électriquement ajustable 5 est le platine ; il est métallique et conducteur. L'isolant est réalisé par la coquille de matériau électriquement isolant 18 en silice et le semi-conducteur est réalisé par la nano-/microparticule 1. L'encart de la figure 4 illustre une transformée de fourrier effectuée au moyen d'une photographie à résolution atomique (non montrée) du cœur 19. Cette transformée de Fourier confirme la cristallinité des nano-/microparticules 1.

Le panneau B de la figure 4 est un montage de trois photographies des nano-/microparticules 1, obtenues au moyen d'analyses dispersives en énergie (spectroscopie EDX). De gauche à droite, les niveaux de gris les plus clairs montrent respectivement la présence de germanium, de silicium et de dioxyde de silicium.

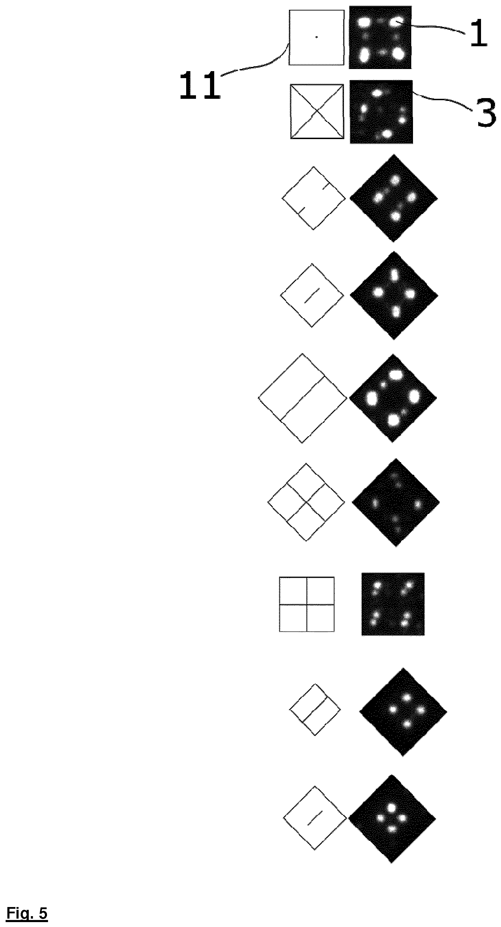

La figure 5 illustre la correspondance entre différents motifs 11 de gravure et la distribution spatiale de la ou des nano-/microparticules 1 sur la couche d'isolant 3. Différents motifs peuvent être gravés sur une galette de SOI avant de réaliser les nano-/microparticules utilisant la méthode décrite dans la figure 1. Ces gravures peuvent être réalisées par une sonde ionique focalisée (FIB, par exemple en utilisant une sonde Tescan LYRA 1 XMH dual-beam). La colonne de gauche présente des motifs 11 utilisés pour la gravure FIB. La colonne de droite présente, à la même échelle, des images en microscopie optique en champ sombre, dont chaque côté de l'image représente 4 µm. Les images de la colonne de droite illustrent la distribution spatiale des nano-/microparticules 1 formées en utilisant la méthode décrite dans la figure 1 précédée de la gravure des motifs 11 correspondants. La gravure de motifs permet de créer de manière contrôlée des défauts sur la couche ou l'empilement de couches de semi-conducteurs avant leur démouillage. Ces défauts permettent de contrôler la nucléation ou la formation d'instabilités de type Rayleigh et d'aboutir à la formation des nano-/microstructures 1. La gravure de différents motifs permet de réaliser un démouillage assisté, en opposition au démouillage spontané réalisé sans gravure.

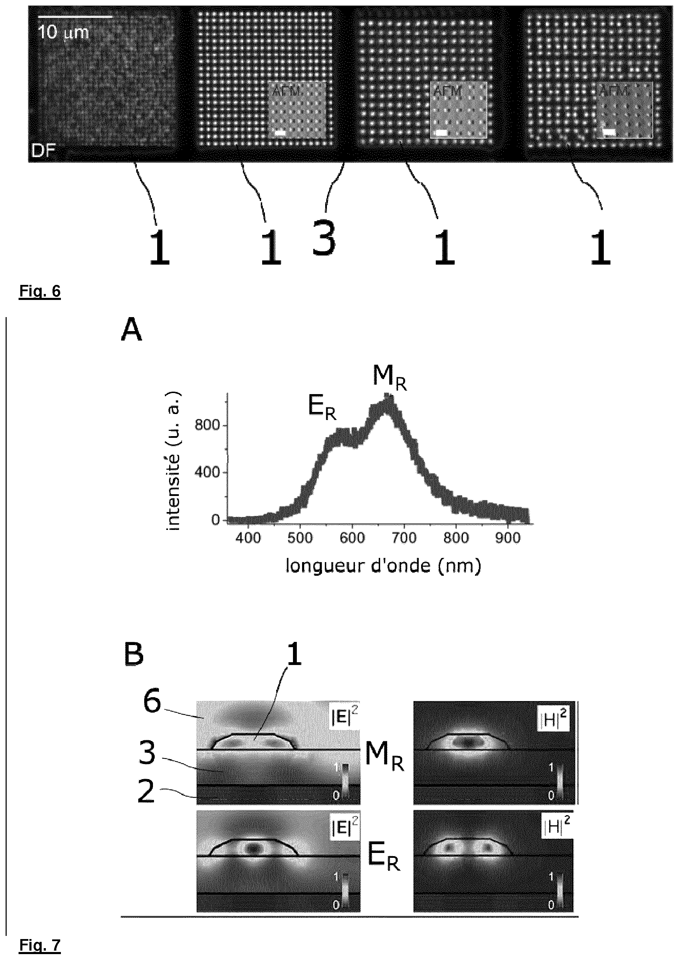

La figure 6 est un montage composé d'une image en microscopie optique de réseaux de nano-/microparticules 1 et de trois images en microscopie AFM, en encarts, indiquant des détails de ces réseaux. Les réseaux de particules 1 sont réalisés par la méthode décrite dans la figure 5, comprenant une étape de gravure de motifs 11 suivie d'une étape de démouillage de la ou des couches semi-conductrices. De gauche à droite de l'image, le pas de l'espacement centre à centre entre particules 1 d'un réseau est respectivement de 500 nm, 750 nm et 1000 nm. Le réseau de droite illustre une distribution bimodale des nano-/microparticules 1, alternant un pas de 750 nm et de 1000 nm entre les centres des différentes nano-/microparticules 1 selon la direction allant de bas en haut de l'image.

La figure 7 illustre les résonances électromagnétiques des nano-/microparticules 1. Le panneau A de la figure 6 illustre un exemple du spectre de diffusion en champ sombre d'une nanoparticule 1 unique réalisée selon la méthode décrite dans la figure 5. Deux résonances en diffusion, M_{R} et E_{R} sont visibles. Le panneau B de la figure 6 illustre des simulations réalisées selon la méthode des éléments finis de l'intensité électrique IEI² et de l'intensité magnétique IBI² au voisinage et dans une nanoparticule 1. Dans les simulations présentées, la largeur de la nanoparticule est de 356 nm et sa hauteur est de 65 nm. Les simulations prennent en compte une nanoparticule 1 disposée sur une couche d'isolant 3 et entourée sur le reste de sa surface par de l'air 6. Des résultats des simulations sont illustrés pour le mode de résonance M_{R} (images du haut) et le mode de résonance E_{R} (images du bas). Les simulations selon les modes E_{R} et M_{R} sont réalisées en considérant une excitation par une onde plane inclinée de 70° par rapport au plan formé par la surface de la couche d'isolant et suivant une rotation par rapport à un axe compris dans le plan de la coupe illustrée. Dans le cas d'une résonance en mode M_{R}, la nanoparticule 1 présente deux maxima spatiaux d'intensité IEI² et un maximum spatial d'intensité IHI² en son centre. Ces caractéristiques indiquent la dominance d'un mode M_{R} magnétique dipolaire. Dans le cas d'une résonance en mode E_{R}, la nanoparticule 1 présente un maximum spatial d'intensité IEI² en son centre et deux maxima spatiaux d'intensité IHI². Ces caractéristiques indiquent la dominance d'un mode de résonance électrique dipolaire.

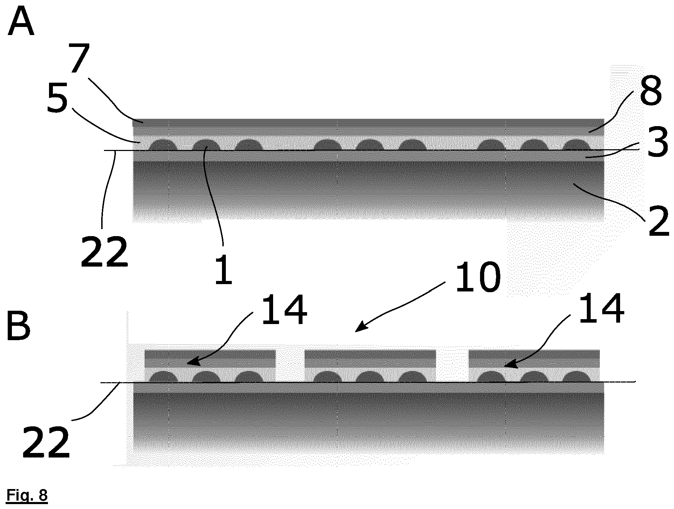

La figure 8 illustre schématiquement un filtre optique 14 selon une réalisation de l'invention et une matrice 10 de filtres optiques 14 selon une réalisation de l'invention. Le panneau A de la figure 8 illustre schématiquement une vue de coupe d'un filtre 14 selon une réalisation de l'invention, et le panneau B de la figure 8 présente une matrice 10 de trois filtres 14 selon une réalisation de l'invention. Dans le panneau A, une pluralité de nano-/microparticules 1 sont agencées à la surface d'un plan (fictif) 22. Dans une réalisation de l'invention, les nano-/microparticules 1 sont réalisées en silicium, en germanium, dans un alliage de silicium et de germanium, ou plus généralement en matériau(x) semi-conducteur(s), ou dans un (des) matériau(x) diélectrique dont l'indice optique est supérieur à 1,5 préférentiellement à 2,5, et préférentiellement supérieur à 3.

Avantageusement, dans la réalisation illustrée dans la figure 8, le filtre comporte une seconde couche électriquement isolante 3. La face supérieure de la couche 3 coïncide avec le plan 22. La couche 3 est alors en contact avec les nano-/microparticules 1. Cette couche 3 peut être par exemple réalisée en SiO₂. D'autres types de matériaux isolants peuvent être utilisés. La seconde couche isolante 3 peut être agencée sur un substrat 2 qui peut avantageusement comporter un transducteur optoélectronique, comme un photodétecteur ou une diode électroluminescente. Les nano-/microparticules 1 de réalisation de l'invention décrite en figure 8 peuvent être fabriquées en utilisant le procédé décrit par Abbarchi *et al.*

La surface formée par le plan 22 et les nano-/microparticules 1 est recouverte d'une couche à indice optique électriquement ajustable 5. Avantageusement, dans une réalisation de l'invention décrite précédemment comportant une seconde couche électriquement isolante 3, le plan 22 coïncide avec une des faces de la couche 3 : l'ensemble formé par la couche 3 et par les nano-/microparticules 1 est recouvert d'une couche à indice optique électriquement ajustable 5. Dans d'autres réalisations de l'invention, une face d'un substrat peut coïncider avec le plan 22 ; la couche à indice optique électriquement ajustable 5 recouvre alors la surface formée par la face supérieure du substrat et les nano-/microparticules 1. Dans ces deux cas, et de manière générale, le plan 22 coïncide avec une couche dont le potentiel électrique est relié électriquement, de manière directe ou indirecte à un potentiel sensiblement fixe et/ou stationnaire par rapport aux variations du potentiel électrique imposé à l'électrode 7, de manière à fixer un champ électrique contrôlé dans le filtre 14.

Le matériau de cette couche est considéré « à indice optique électriquement ajustable » quand la partie réelle de son indice de réfraction peut être modifiée par la variation d'un champ électrique ou d'un courant électrique appliqué au matériau. Cette propriété peut provenir de l'injection de porteurs de charges, ou d'autres effets, comme par exemple l'effet Kerr, l'effet Pockels, l'électro-absorption ou l'effet Franz-Keldysh. D'autres effets peuvent aussi être considérés lors de l'utilisation de polymères comme le gonflage et l'effondrement électrostatique ou la diffusion contrôlée d'ions au sein du ou des polymères. Dans des réalisations de l'invention, le ou les matériaux de cette couche peuvent être choisis parmi de l'oxyde d'indium-étain (ITO), de l'oxyde de zinc-aluminium, des réseaux de nanotubes de carbone, ou un matériau organique tel que le poly(3,4-éthylènedioxythiophène) (PEDOT), le poly(4,4-dioctylcyclopentadithiophene), le polystyrène sulfonate de sodium (PSS) et le poly(methyl methacrylate) (PMMA). On peut aussi utiliser une couche de cristaux liquides associée à une ou plusieurs couches de polymères d'alignement (par exemple du polyvinyl acetate) pour réaliser une couche à indice optique électriquement ajustable 5. Une méthode d'ajustement thermique de la résonance de nano-/microparticules utilisant de tels cristaux liquides est par exemple présentée dans Sautter, J., Staude, I., Decker, M., Rusak, E., Neshev, D. N., Brener, I., & Kivshar, Y. S., 2015, Active Tuning of All-Dielectric Metasurfaces. Cette méthode présente les défauts de nécessiter plusieurs couches pour permettre d'initier un alignement adéquat des cristaux liquides en phase nématique et de permettre un ajustement sur une gamme de longueurs d'onde très restreinte (sensiblement 100 nm dans les proches infrarouges). Avantageusement, au moins un matériau de la couche à indice optique électriquement ajustable 5 est un matériau organique. Avantageusement, le matériau de la couche 5 peut être un mélange de PEDOT et de PSS. De manière générale, le ou les matériaux de la couche à indice optique électriquement ajustable 5 sont préférentiellement solides : ils peuvent être par exemple amorphes ou cristallins. Ils peuvent sinon par exemple comporter une phase liquide.

Différentes méthodes peuvent être utilisées pour déposer la couche à indice optique électriquement ajustable 5, telles que la pulvérisation cathodique pour des matériaux métalliques, ou l'enduction centrifuge (*spin coating* en anglais) pour des matériaux organiques.

Dans cette réalisation de l'invention, la couche à indice optique électriquement ajustable 5 est sensiblement transparente.

La couche à indice optique électriquement ajustable 5 est recouverte par une première couche électriquement isolante 8. Cette couche 8 peut être réalisée en SiO₂, par exemple par une méthode de déposition chimique en phase vapeur assistée par plasma (PE-CVD), par oxydation thermique rapide (RTP) ou plus généralement par d'autres méthodes d'oxydations si la couche à indice optique électriquement ajustable 5 y est compatible.

La première couche isolante 8 est recouverte par une couche de matériau électriquement conducteur, soit une électrode 7. Dans les différentes réalisations de l'invention, l'électrode est sensiblement transparente. Elle peut par exemple être réalisée en or par évaporation, dans le cas d'une couverture de larges surfaces, ou par injection de gaz assistée par FIB pour la réalisation de circuiteries précises. L'électrode 7 peut également être réalisée en ITO.

Une gravure peut être effectuée sur le filtre 14 décrit précédemment, par exemple par FIB ou par rayon d'électrons (*E*-*beam*), sur les différentes couches situées sur la seconde couche isolante 3. Cette gravure peut permettre de délimiter spatialement une pluralité de filtres 14, soit différents pixels, et ainsi de former une matrice 10 de filtres 14.

Le panneau B de la figure 8 présente une matrice 10 de trois filtres 14, (ou trois pixels), après une gravure de définition des pixels décrite au paragraphe précédent.

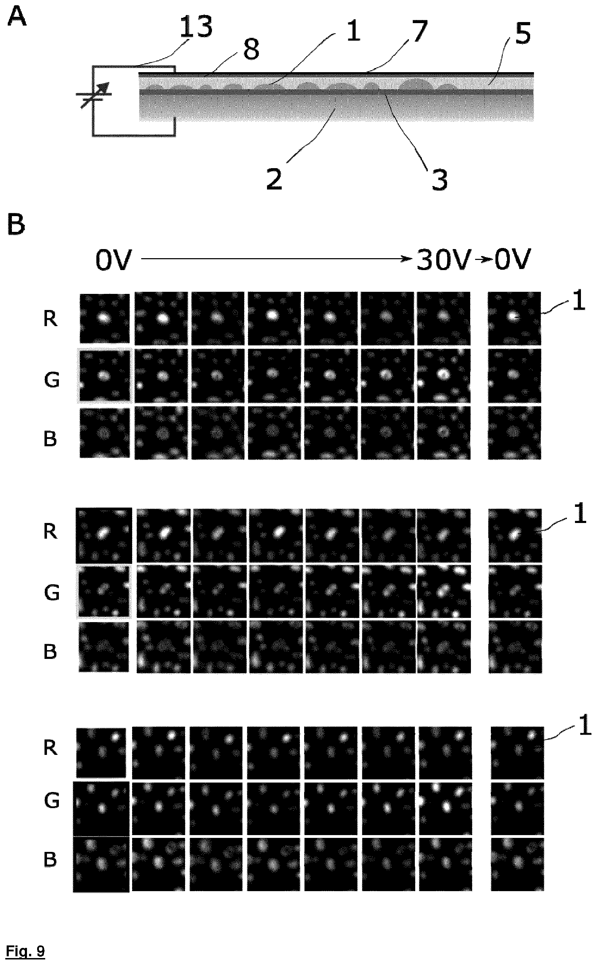

La figure 9 illustre l'ajustement de la fréquence de résonance des nano-/microparticules 1 par imposition d'un potentiel à la couche à indice optique électriquement ajustable 5. Le panneau A de la figure 9 illustre une réalisation de l'invention dans laquelle un premier circuit 13 est connecté d'une part à la masse (substrat 2 dans cette réalisation) et d'autre part à l'électrode 7 du dispositif décrit dans le panneau A de la figure 7. Ce premier circuit permet d'imposer une différence de potentiel contrôlée entre les deux faces supérieure et inférieure de la couche à indice optique électriquement ajustable 5. Dans cette réalisation de l'invention, les nano-/microparticules 1 ont des tailles différentes et la couche à indice optique électriquement ajustable 5 est un mélange de PEDOT et de PSS.

Le panneau B de la figure 9 illustre des photographies de diffusion en champ sombre des nano-/microparticules 1 pour différents potentiels appliqués par le premier circuit 13. Chaque photographie illustre un champ de 2 µm de côté. Trois séries d'images sont illustrées. Chacune d'entre elles présente, de haut en bas des canaux de couleurs différentes, et de gauche à droite, des potentiels appliqués à la couche à indice optique électriquement ajustable 5 différents. Les canaux de couleur sont rouge (R), vert (G) et bleu (B). De gauche à droite, les images correspondent à une séquence de potentiels imposés allant de 0 à 30 V puis à un potentiel de 0 V.

L'observation de l'intensité lumineuse du canal R de la première série permet par exemple de mesurer une diminution de l'intensité lumineuse diffusée par la nano-/microparticule 1 centrale quand des potentiels de 0 V à 30 V sont appliqués, puis une augmentation de cette intensité quand le potentiel appliqué revient à 0 V. De manière complémentaire, l'observation de l'intensité lumineuse du canal G de la première série permet de mesurer une augmentation de l'intensité de diffusion de la nano-/microparticule 1 centrale quand des potentiels de 0 V à 30 V sont appliqués, puis une diminution de cette intensité quand le potentiel appliqué revient à 0 V. Ces variations se traduisent, en considérant les trois canaux de couleurs, par une variation de la couleur observée de la nano-/microparticule 1 centrale : de 0 V à 30 V, la couleur émise par la nano-/microparticule 1 varie d'une dominante rouge à une dominante verte et revient à une dominante rouge quand le potentiel de 0 V est imposé. Les nano-/microparticules 1 des deux autres séries présentent des comportements similaires. Cet exemple de réalisation de l'invention permet d'illustrer l'ajustement de la fréquence de résonance de différentes nano-/microparticules 1 dans le spectre du visible par l'application d'un potentiel électrique variable par le premier circuit 13. Dans d'autres réalisations de l'invention, l'ajustement de la résonance des nano-/microparticules 1 peut être effectué pour des longueurs d'onde du proche infrarouge, par exemple pour des longueurs d'onde comprises dans une gamme allant de 800 nm à 2,5 µm.

L'invention concerne également des photodétecteurs 15 basés sur de tels filtres 14, tirant parti du caractère sélectif et accordable du spectre lumineux des filtres 14. Un filtre 14 selon l'invention peut être disposé sur un photodétecteur conventionnel, par exemple un pixel d'un capteur matriciel CCD ou CMOS, ou servir lui-même de photodétecteur.

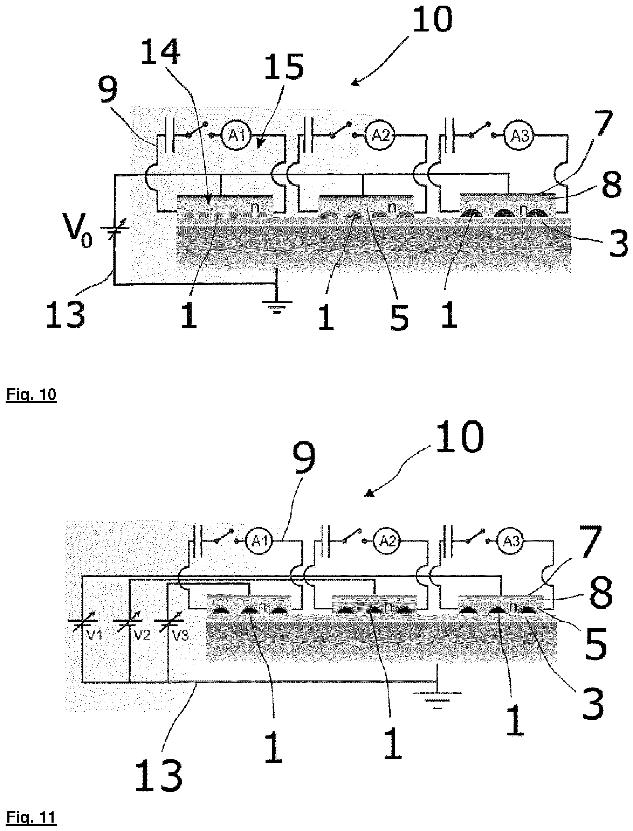

La figure 10 illustre schématiquement une matrice 10 de photodétecteurs 15 réalisés au moyen de filtres 14 selon des réalisations de l'invention. La matrice de filtres de la réalisation illustrée en figure 10 peut être fabriquée par les méthodes présentées lors de la description des figures précédentes. Dans une réalisation de l'invention, chaque filtre 14 comporte une pluralité de nano-/microparticules 1. Les nano-/microparticules 1 d'un même filtre 14 sont toutes sensiblement de la même taille, et sont de tailles différentes selon les filtres 14 de la matrice 10. Ainsi, la couleur entre des filtres 14 d'une matrice 10 peut varier en fonction d'une combinaison de deux facteurs indépendants : la taille des nano-/microparticules 1 et l'indice optique de la couche 5 de chaque filtre, imposé par la ou les polarisations desdites couches 5.

Le matériau de la couche à indice optique électriquement ajustable 5, d'indice optique noté n, peut être conducteur ou semi-conducteur. Il peut être adapté à créer, en association avec des nano-/microparticules 1, des charges lors de la résonance électromagnétique desdites nano-/microparticules 1 à leur interface. On peut par exemple utiliser un mélange de PSS-PEDOT pour cette réalisation de l'invention : une variation de champ électromagnétique dans les nano-/microparticules 1 permet la formation des charges dans le dispositif et leurs transports vers, par exemple, un second circuit électrique 9.

Ces charges peuvent être aussi créées à la jonction formée entre le semi-conducteur d'une particule 1 et par le contact électrique formé par le matériau de la couche à indice optique électriquement ajustable 5. Dans des réalisations de l'invention, la jonction entre les nano-/microparticules 1 et la couche à indice optique électriquement ajustable 5 peut être de type métal-semi-conducteur (comportement d'une barrière de Schottky), de type p-n ou de type métal-isolant-semi-conducteur (MIS).

Les jonctions de types p-n peuvent être réalisées en utilisant des nano-/microparticules fabriquées selon la méthode décrite dans Abbarchi *et al.* et en utilisant par exemple avant démouillage une couche de silicium sur laquelle est disposée une couche épitaxiale de germanium dopée par exemple avec de l'antimoine et/ou du bore. Après démouillage, les nano-microparticules 1 formées peuvent comporter une coquille semi-conductrice 20 de composition SiₓGe₍₁₋ₓ₎ (x étant la proportion de Silicium) autour du cœur de la particule comportant du silicium. Un exemple d'une telle nano-/microparticule est illustré dans la figure 2.

Dans d'autres réalisations de l'invention, des jonctions de type Schottky peuvent être réalisées à l'interface entre les particules 1 et la couche 5. La figure 4 décrit par exemple une jonction de type MIS entre la couche à indice optique électriquement ajustable 5 et la nano-/microparticule 1. L'épaisseur de la coquille de matériau électriquement isolant 18 peut être réduite de manière à être inférieure à 10 nm et préférentiellement à 5 nm pour permettre de transférer des charges au travers du matériau isolant par effet tunnel. La réduction de cette épaisseur peut être réalisée par gravure isotrope de la silice par exemple.

La figure 11 illustre une matrice de trois photodétecteurs 15, chaque détecteur comportant un filtre 14 relié à un second circuit électrique 9 par la couche à indice optique électriquement ajustable 5, dans le cas de la réalisation décrite précédemment. Les charges créées par la résonance des nano-/microparticules 1 , peuvent être détectées par un second circuit électrique. Cette détection peut-être réalisée en deux étapes. Une première étape peut consister à illuminer les nano-/microparticules 1, entraînant le chargement d'une capacité quand l'interrupteur du second circuit 9 est ouvert. Une seconde étape peut consister à fermer l'interrupteur du second circuit et de la lecture de la charge accumulée dans la capacité par un ampèremètre (A1, A2 ou A3 sur la figure 9) ou un oscilloscope par exemple, par intégration de charge par exemple.

Dans une réalisation de l'invention, un premier circuit électrique 13 peut relier au moins deux filtres 14 et/ou deux photodétecteurs 15 de manière à imposer le même potentiel V₀ entre une masse électrique et les électrodes 7 de chaque filtre 14 et/ou détecteur 15 relié au premier circuit. Avantageusement, le premier circuit peut être relié à l'ensemble des filtres 14 et/ou photodétecteurs 15 de la matrice. Ces exemples permettent de travailler à une polarisation constante de la couche à indice optique électriquement ajustable 5 d'une partie ou de l'ensemble des filtres et/ou des photodétecteurs.

La figure 11 illustre schématiquement une matrice 10 de filtres 14 et de photodétecteurs 15 selon des réalisations de l'invention. Dans une réalisation de l'invention, une partie des nano-/microparticules 1, ou avantageusement l'ensemble des nano-/microparticules 1 ont la même taille. Ces nano-/microparticules 1 sont illustrées par des lobes noirs sur la figure 10. Dans cette réalisation de l'invention, chacun des filtres 14 est relié à un premier circuit électrique 13 par l'électrode 7 du filtre. Chacun des filtres peut être polarisé en imposant un potentiel indépendant des autres à l'électrode 7 d'un filtre : dans la figure 10, le potentiel V1 est imposé à l'électrode du filtre de droite, le potentiel V2 est imposé à l'électrode du filtre du milieu et le potentiel V3 est imposé à l'électrode du filtre de gauche. Respectivement, les indices optiques des filtres, n₁, n₂ et n₃, sont différents (le matériau de la couche à indice optique électriquement ajustable 5 peut être le même). Comme décrit en figure 8, la polarisation du filtre permet d'ajuster la fréquence de résonance du filtre pour des nano-/microparticules données. Dans le cas de la figure 11, les nano-/microparticules sont de tailles sensiblement égales et on peut ajuster chacun des filtres 14 à des fréquences de résonance différentes en appliquant des potentiels différents. L'application de potentiels différents permet de réaliser des filtres de couleurs différentes. Dans d'autres réalisations de l'invention, un premier circuit électrique 13 peut être relié à une partie des filtres 14 de la matrice de manière à imposer un potentiel indépendant des autres filtres 14 de la matrice.

La réalisation de l'invention illustrée en figure 11 comporte trois photodétecteurs, chaque photodétecteur comprenant un filtre 14 et un second circuit 9. Comme décrit précédemment, l'imposition de potentiels différents par les premiers circuits 13 permet d'obtenir des filtres 14 de couleurs différentes. On peut alors détecter l'intensité lumineuse pour des couleurs différentes en imposant des potentiels V₁, V₂ et V₃ différents au moyen des premiers circuits, et en détectant les charges produites par une exposition lumineuse avec les seconds circuits 9. Dans une autre réalisation de l'invention, un premier circuit électrique 13 peut être relié à une partie des photodétecteurs 15 de la matrice 10 de manière à imposer un potentiel indépendant des autres photodétecteurs 15 de la matrice.

Dans une réalisation de l'invention, on peut filtrer une lumière incidente en imposant un potentiel contrôlé à un ou plusieurs filtres, compris dans des photodétecteurs. Lors du filtrage, le ou les potentiels imposés à des électrodes 7 d'une matrice 10 sont pilotés par une unité de traitement de manière à filtrer la lumière à la ou aux fréquences de résonance paramétrées par un utilisateur.

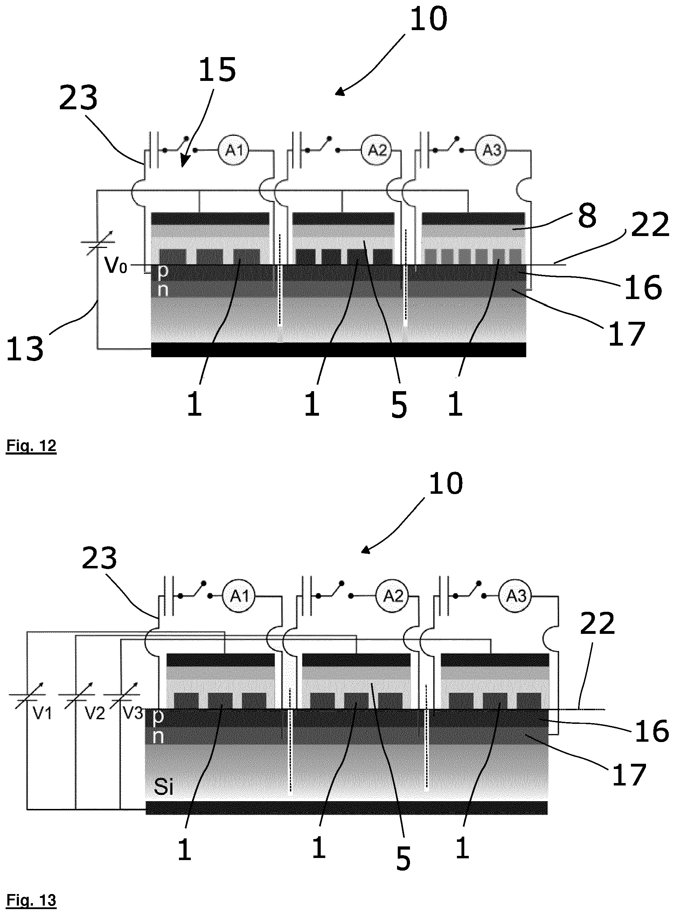

La figure 12 illustre une matrice de trois photodétecteurs 15 selon des réalisations de l'invention. Dans ces réalisations de l'invention, les différents filtres 14 ne comportent pas de seconde couche électriquement isolante 3 ; ils sont fabriqués selon le procédé décrit dans Proust *et al.* Chacun des filtres 14 est inclus dans un photodétecteur à jonction p-n : le plan 22 sépare dans cette réalisation de l'invention un filtre 14 d'une couche de matériau semi-conducteur dopée p 16 de la photodiode à jonction p-n. Plus généralement, chacun des filtres 14 peut être disposé sur une couche dopée p 16 ou sur une couche dopée n 17 de la jonction p-n. De manière similaire au circuit décrit en figure 10, un premier circuit électrique 13 peut relier au moins deux filtres 14 et/ou deux photodétecteurs 15 de manière à imposer le même potentiel V₀ entre une masse électrique et les électrodes 7 de chaque filtre 14 et/ou détecteur 15 relié au premier circuit. Avantageusement, le premier circuit peut être relié à l'ensemble des filtres 14 et/ou photodétecteurs 15 de la matrice.

Dans cette réalisation de l'invention, une borne d'un troisième circuit 23 est connectée à la couche dopée p 16 d'une jonction p-n d'un photodétecteur et une autre borne d'un troisième circuit 23 est connectée à la couche dopée n 17 d'une jonction p-n du même photodétecteur. Le troisième circuit 23 permet la récupération des charges créées lors d'une illumination de la jonction p-n transmise par le filtre 14. Les pointillés verticaux séparant deux pixels schématisent une séparation électrique entre les différentes jonctions p-n correspondant aux différents pixels de la matrice.

La réalisation de l'invention illustrée dans la figure 12, dont chacun des pixels est polarisé par V₀ est typiquement adaptée à une matrice dans laquelle la différence de couleur des filtres est en partie due à la présence de nano-/microparticules 1 sensiblement de même taille pour un pixel considéré mais de tailles différentes pour deux pixels considérés de couleurs différentes.

La figure 13 illustre une matrice de trois photodétecteurs 15 selon des réalisations de l'invention. Dans ces réalisations de l'invention, les différents filtres 14 ne comportent pas de seconde couche électriquement isolante 3 ; ils sont fabriqués selon le procédé décrit dans Proust *et al.* Chacun des filtres 14 est inclus dans un photodétecteur à jonction p-n : le plan 22 sépare dans cette réalisation de l'invention un filtre 14 d'une couche de matériau semi-conducteur dopée p 16 de la photodiode à jonction p-n. Plus généralement, chacun des filtres 14 peut être disposé sur une couche dopée p 16 ou sur une couche dopée n 17 de la jonction p-n. De manière similaire au circuit décrit en figure 11, chacun des filtres 14 est relié à un premier circuit électrique 13 par l'électrode 7 du filtre. Chacun des filtres peut être polarisé en imposant un potentiel indépendant des autres à l'électrode 7 d'un filtre : dans la figure 13, le potentiel V₁ est imposé à l'électrode du filtre de gauche, le potentiel V₂ est imposé à l'électrode du filtre du milieu et le potentiel V₃ est imposé à l'électrode du filtre de droite. Respectivement, les indices optiques des filtres, n₁, n₂ et n₃, sont différents. Comme décrit en figure 8, la polarisation du filtre permet d'ajuster la fréquence de résonance du filtre pour des nano-/microparticules données. Dans le cas de la figure 13, les nano-/microparticules sont de tailles sensiblement égales et on peut ajuster chacun des filtres 14 à des fréquences de résonance différentes en appliquant des potentiels différents. L'application de potentiels différents permet de réaliser des filtres de couleurs différentes. Dans d'autres réalisations de l'invention, un premier circuit électrique 13 peut être relié à une partie des filtres 14 de la matrice de manière à imposer un potentiel indépendant des autres filtres 14 de la matrice.

Dans cette réalisation de l'invention, une borne d'un troisième circuit 23 est connectée à la couche dopée p 16 d'une jonction p-n d'un photodétecteur et une autre borne d'un troisième circuit 23 est connectée à la couche dopée n 17 d'une jonction p-n d'un photodétecteur. Le troisième circuit 23 permet la récupération des charges créées lors d'une illumination de la jonction p-n transmise par le filtre 14. Les pointillés verticaux séparant deux pixels schématisent une séparation électrique entre les différentes jonctions p-n correspondant aux différents pixels de la matrice.

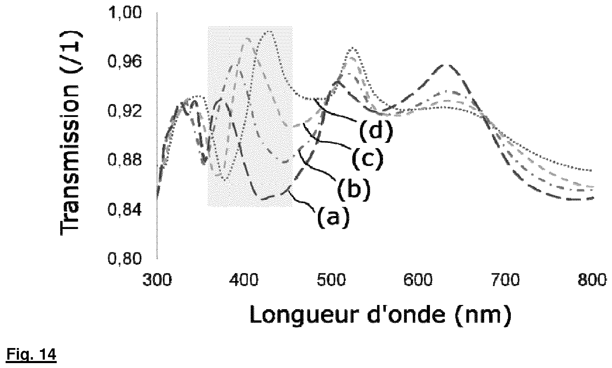

La figure 14 illustre une simulation de la transmission optique d'un filtre 14 selon l'invention, en fonction de différents indices optiques d'une couche à indice optique électriquement ajustable 5. La simulation est réalisée selon la méthode de Différences Finies - Domaine Temporelle (DFDT). Dans cette méthode, les objets simulés dans l'espace sont discrétisés sur dans une maille en 3 dimensions, répétée périodiquement. Le filtre 14 simulé comprend des nano-/microparticules 1 cylindriques en silicium, disposées sur un plan 22 en silicium et séparées périodiquement d'une distance de 230 nm. Une couche à indice optique électriquement ajustable 5 est disposée sur le plan 22 et sur et/ou autour de la nano/-microparticule 1. La simulation illustrée est réalisée en considérant une maille comprenant un plan 22 à la surface supérieure d'un substrat en silicium, d'une largeur de 230 nm, une nano-/microparticules 1 cylindrique d'une hauteur de 150 nm et d'un diamètre de 160 nm et une couche de couche à indice optique électriquement ajustable 5 disposée sur la surface formée par la nano-/microparticules 1 d'une maille et ledit plan 22. Les quatre courbes correspondent à des simulations paramétrées avec des indices optiques de la couche 5 différents (la courbe (a) correspond à n_{amb} = 1,4, la courbe (b) correspond à n_{amb}= 1,5, la courbe (c) correspond à n_{amb} = 1,6 et la courbe (d) correspond à n_{amb} = 1,7). La zone grisée correspond à une gamme de longueur d'onde (par exemple entre 350 et 450 nm) dans laquelle la longueur d'onde d'un pic de transmission du filtre est particulièrement dépendante de l'indice optique de la couche 5. Ainsi, pour des valeurs de l'indice optique n_{amb} variant de 1,4 à 1,7, la longueur d'onde du pic de transmission dans cette gamme de longueur d'onde varie d'environ 370 nm à 450 nm.

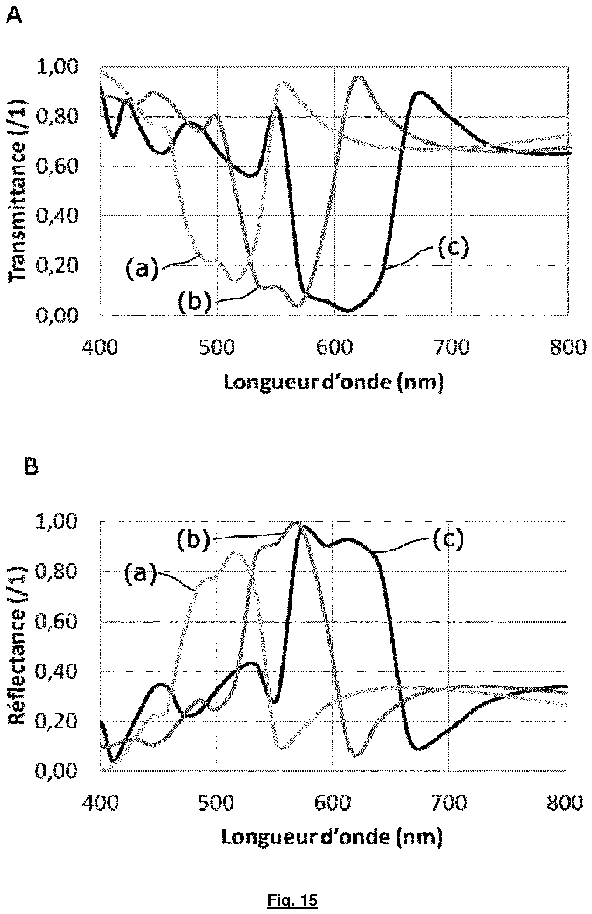

La figure 15 illustre des simulations de la transmittance optique d'un filtre différent de l'invention, en fonction de la longueur d'onde d'excitation du filtre. Les simulations sont réalisées selon la méthode des Différences Finies - Domaine Temporelle (DFDT). Dans cette méthode, les objets simulés dans l'espace sont discrétisés sur dans une maille en 3 dimensions, répétée périodiquement. Le filtre simulé comprend des nano-/microparticules 1 cylindriques en silicium-germanium disposées sur un plan 22. Le plan 22 coïncide avec une seconde couche électriquement isolante 3, en SiO₂ dans le cas de la simulation. Une électrode 7 est disposée au dessus d'une ou plusieurs nano-/microparticules 1 et de la seconde couche électriquement isolante 3. Une couche de silicium est disposée en dessous de la seconde couche électriquement isolante 3. Les nano-/microparticules 1 simulées sont sensiblement hémisphériques, la partie plane des hémisphères formés par les nano-/microparticules 1 coïncidant avec le plan 22, et dans le cas particulier de la simulation avec une seconde couche électriquement isolante 3 en Si0₂. Le panneau A de la figure 15 illustre la transmittance de ce type de filtre. Le panneau B de la figure 15 illustre la réflectance de ce type de filtre. Dans les panneaux A et B, les courbes (a) correspond à un une simulation paramétrée avec un rayon r de l'hémisphère formé par une nano-/microparticule égal à 80 nm. Les courbes (b) correspondent à un rayon de 90 nm et les courbe (c) correspondent à un rayon de 100 nm.

Les inventeurs ont découvert que d'une manière générale, la combinaison de nano-microparticules 1 sensiblement hémisphériques disposées sur une seconde couche électriquement isolante 3 dont l'indice optique est inférieur à l'indice optique des nano-microparticules 1 permet de réaliser un filtre sélectif aux longueurs d'ondes. Par exemple, la transmittance est particulièrement basse pour des longueurs d'onde comprises entre 550 nm et 650 nm dans la réalisation illustrée dans le panneau A de la figure 15. On peut utiliser cette caractéristique dans un filtre 14 selon l'invention, comprenant entre autre une couche à indice optique électriquement ajustable 5 et une première couche électriquement isolante 8 disposée sur ladite couche à indice optique électriquement ajustable 5 de manière à réaliser un filtre électriquement ajustable et sélectif. Les inventeurs ont en outre découvert que la sélectivité du filtre est optimisée quand l'indice optique de la seconde couche électriquement isolante 3 est strictement inférieur à l'indice de la nano-/microparticule 1. Plus particulièrement, la sélectivité du filtre est optimisée quand le rapport de l'indice optique des nano-/microparticules 1 sur l'indice optique d'une seconde couche électriquement isolante 3 est élevé, préférentiellement supérieur à 2. On peut ainsi utiliser du SiO₂ et/ou du TiO₂ pour la réalisation de la seconde couche électriquement isolante 3.

## Revendications

1. Filtre optique (14) électriquement accordable comprenant :
- une pluralité de nano-/microparticules (1) semi-conductrices ou diélectriques, présentant des propriétés de résonance électromagnétique dans le domaine optique et proche infrarouge, agencées sur un plan (22), **caractérisé en ce qu'**il comprend en outre :
- une couche à indice optique électriquement ajustable (5) recouvrant la surface formée par lesdites nano-/microparticules (1) et ledit plan (22),
- une première couche électriquement isolante (8) disposée sur ladite couche à indice optique électriquement ajustable (5) et
- une électrode (7) disposée sur ladite première couche électriquement isolante,
- un substrat conducteur (2) ou une couche conductrice disposé du côté dudit plan (22) qui est opposé à ladite électrode,
- un premier circuit électrique (13) connecté d'une part à ladite électrode et d'autre part à ladite couche conductrice ou audit substrat conducteur, et configuré pour appliquer une différence de potentiel et fixer un champ électrique contrôlé dans le filtre (14).

2. Filtre selon la revendication 1 dans lequel les nano-/microparticules diélectriques présentent un indice optique supérieur à 2.5.

3. Filtre selon l'une des revendications précédentes comprenant une seconde couche électriquement isolante (3) dont une face coïncide avec ledit plan (22), ladite seconde couche électriquement isolante étant en contact avec desdites nano-/microparticules (1) et la couche à indice optique électriquement ajustable (5).

4. Filtre selon l'une des revendications 1 ou 3 dans lequel au moins une dite nano-/microparticule (1) comporte un cœur semi-conducteur (19) et une coquille semi-conductrice (20) dont les propriétés électriques sont différentes et adaptées à former au moins une jonction choisie parmi une homojonction anisotype, une hétérojonction isotype et une hétérojonction anisotype.

5. Filtre selon l'une des revendications précédentes comportant au moins une coquille de matériau électriquement isolant (18) dans lequel au moins une dite nano-/microparticule (1) est entourée, au moins partiellement, d'une dite coquille de matériau électriquement isolant (18).

6. Filtre optique selon la revendication précédente dans lequel au moins un matériau de ladite couche à indice optique électriquement ajustable (5) est un matériau organique.

7. Filtre optique selon la revendication 1 dans lequel le matériau de ladite couche à indice optique électriquement ajustable (5) est choisi au moins parmi le poly(3,4-éthylènedioxythiophène), le polystyrène sulfonate de sodium, l'oxyde d'indium-étain, l'oxyde de zinc-aluminium, le poly(4,4-dioctylcyclopentadithiophene), le poly(methyl methacrylate) et des réseaux de nanotubes de carbone.

8. Filtre optique selon l'une des revendications précédentes dont la taille et le matériau desdites nano-/microparticules (1) sont adaptés à permettre une résonance desdites nano-/microparticules (1) pour des longueurs d'onde d'excitation comprises entre 300 nm et 2,5 µm.

9. Filtre optique selon l'une des revendications précédentes dans lequel le premier circuit électrique (13) est adapté d'une part à appliquer un potentiel de masse à ladite couche conductrice ou au substrat conducteur et d'autre part à appliquer un potentiel fixe ou stationnaire à adapté à la polarisation de ladite couche à indice optique électriquement ajustable (5).

10. Filtre optique selon l'une des revendications 2 à 9 dans lequel l'indice optique du matériau de ladite seconde couche électriquement isolante (3) est strictement inférieur à l'indice optique du matériau desdites nano-/microparticules (1) et dans lequel lesdites nano-/microparticules (1) sont sensiblement hémisphériques, la partie plane des hémisphères formés par lesdites nano-/microparticules (1) coïncidant avec ledit plan (22).

11. Matrice (10) de filtres optiques selon l'une des revendications 1 à10.

12. Matrice de filtres optiques selon la revendication 11 dans laquelle au moins deux dits premiers circuits (13) sont connectés de manière à imposer le même potentiel entre ladite masse et chaque dite électrode (7).

13. Matrice de filtres optiques selon l'une des revendications 11 à 12 dans laquelle au moins un dit premier circuit électrique (13) est adapté à imposer un potentiel indépendant desdits autres premiers circuits électriques (13), à au moins une dite électrode (7).

14. Photodétecteur à jonction p-n (21), comportant un filtre selon l'une des revendications 1 à 10, dont ledit filtre est disposé sur une couche choisie parmi une couche dopée n et une couche dopée p de ladite jonction p-n.

15. Photodétecteur (15) comprenant un filtre optique selon l'une des revendications précédentes, dont le matériau de ladite couche à indice optique électriquement ajustable (5) est conducteur.

16. Photodétecteur selon la revendication précédente, comprenant un second circuit électrique (9), dont deux bornes sont connectées à ladite couche à indice électriquement ajustable (5), ledit second circuit électrique (9) étant adapté à détecter des variations de courant électrique aux dites bornes.

17. Matrice de dits photodétecteurs (15) selon l'une des revendications 14 à 16.

18. Matrice de photodétecteurs (15) selon la revendication précédente dans laquelle au moins deux dits premiers circuits (13) sont connectés de manière à imposer le même potentiel entre ladite masse et chaque dite électrode (7).

19. Matrice de photodétecteurs (15) selon l'une des revendications 17 et 18 dans laquelle au moins un dit premier circuit électrique (13) est adapté à imposer un potentiel indépendant desdits autres premiers circuits électriques (13), à au moins une dite électrode (7).

20. Procédé de fabrication d'un dispositif selon l'une des revendications précédentes comportant au moins les étapes suivantes :
a) démouillage d'au moins une couche de matériau semi-conducteur préalablement déposée sur une dite seconde couche électriquement isolante (3) ;
b) dépôt d'une dite couche à indice optique électriquement ajustable (5) sur lesdits matériaux semi-conducteurs et isolant.

21. Procédé selon la revendication précédente comportant une étape initiale consistant à graver des motifs (11) sur ladite couche d'au moins un dit matériau semi-conducteur, lesdits motifs (11) contrôlant spatialement la formation de dites nano-/microparticules (1) lors de l'étape a).

22. Procédé selon l'une des revendications 20 et 21 dans lequel on grave au moins une dite couche de matériau semi-conducteur avec une sonde ionique focalisée.

23. Procédé selon l'une des revendications 20 à 22 comprenant une étape consistant à graver au moins ladite couche à indice électriquement ajustable (5) de manière à définir spatialement lesdits dispositifs selon l'une des revendications 1 à 9 et 14 à 16.

24. Procédé de filtrage optique par un dispositif selon l'une des revendications 1 à 19, ledit procédé comportant au moins une étape consistant à ajuster la longueur d'onde de résonance desdites nano-/microparticules (1) en pilotant le potentiel à la borne de ladite électrode (7).

## Patentansprüche

1. Optisches Filter (14), das elektrisch angeschlossen werden kann und Folgendes umfasst:
- mehrere halbleitende oder dielektrische Nano-/Mikropartikel (1), die Eigenschaften von elektromagnetischer Resonanz im optischen und nahen Infrarotbereich haben, angeordnet auf einer Ebene (22), **dadurch gekennzeichnet, dass** es ferner Folgendes umfasst:
- eine Schicht mit elektrisch justierbarem optischem Index (5), die die von den Nano-/Mikropartikeln (1) gebildete Oberfläche und die Ebene (22) bedeckt,
- eine elektrisch isolierende erste Schicht (8), die auf der Schicht mit elektrisch justierbarem optischem Index (5) angeordnet ist, und
- eine Elektrode (7), die auf der elektrisch isolierenden ersten Schicht angeordnet ist,
- ein Leitersubstrat (2) oder eine leitfähige Schicht, die auf der der Elektrode gegenüberliegenden Seite der Ebene (22) angeordnet ist,
- eine erste elektrische Schaltung (13), die einerseits mit der Elektrode und andererseits mit der leitfähigen Schicht oder dem Leitersubstrat verbunden und zum Anlegen eines Differenzpotentials und zum Fixieren eines im Filter (14) gesteuerten elektrischen Feldes konfiguriert ist.

2. Filter nach Anspruch 1, bei dem die dielektrischen Nano-/Mikropartikel einen optischen Index von mehr als 2,5 haben.

3. Filter nach einem der vorherigen Ansprüche, das eine zweite elektrische isolierende Schicht (3) aufweist, von der eine Fläche mit der Ebene (22) zusammenfällt, wobei die zweite elektrisch isolierende Schicht mit den Nano-/Mikropartikeln (1) und der Schicht mit elektrisch justierbarem optischem Index (5) zusammenfällt.

4. Filter nach Anspruch 1 oder 3, bei dem wenigstens ein Nano-/Mikropartikel (1) einen Halbleiterkern (19) und eine halbleitende Schale (20) umfasst, deren elektrische Eigenschaften unterschiedlich und so ausgelegt sind, dass sie wenigstens einen Übergang bilden, ausgewählt aus einem anisotropen Homoübergang, einem isotropen Heteroübergang und einem anisotropen Heteroübergang.

5. Filter nach einem der vorherigen Ansprüche, das wenigstens eine Schale aus elektrisch isolierendem Material (18) umfasst, in der wenigstens ein Nano-/Mikropartikel (1) wenigstens teilweise von einer Schale aus elektrisch isolierendem Material (18) eingeschlossen wird.

6. Optisches Filter nach dem vorherigen Anspruch, bei dem wenigstens ein Material der Schicht mit elektrisch justierbarem optischem Index (5) ein organisches Material ist.

7. Optisches Filter nach Anspruch 1, bei dem das Material der Schicht mit elektrisch justierbarem optischem Index (5) ausgewählt ist aus Poly(3,4-ethylendioxythiophen), Natriumsulfonat-Polystyrol, Indium-Zinn-Oxid, Zink-Aluminium-Oxid, Poly(4,4-dioctylcyclopentandithiophen), Poly(methylmethacrylat) und Kohlenstoffnanoröhrchen-Netzwerken.

8. Optisches Filter nach einem der vorherigen Ansprüche, wobei seine Größe und das Material der Nano-/Mikropartikel (1) so ausgelegt sind, dass sie eine Resonanz der Nano-/Mikropartikel (1) für Anregungswellenlängen zwischen 300 nm und 2,5 µm zulassen.

9. Optisches Filter nach einem der vorherigen Ansprüche, bei dem die erste elektrische Schaltung (13) einerseits zum Anlegen eines Massepotentials an die leitfähige Schicht oder an das Leitersubstrat und andererseits zum Anlegen eines festen oder stationären Potentials ausgelegt ist, und für die Polarisation der Schicht mit elektrisch justierbarem optischem Index (5) ausgelegt ist.

10. Filter nach einem der Ansprüche 2 bis 9, bei dem der optische Index des Materials der zweiten elektrisch isolierenden Schicht (3) strikt kleiner ist als der optische Index des Materials der Nano-/Mikropartikel (1), und bei dem die Nano-/Mikropartikel (1) im Wesentlichen halbkugelförmig sind, wobei der flache Teil der durch die Nano-/Mikropartikel (1) gebildeten Halbkugeln mit der Ebene (22) zusammenfällt.

11. Matrix (10) von optischen Filtern nach einem der Ansprüche 1 bis 10.

12. Matrix von optischen Filtern nach Anspruch 11, bei der wenigstens zwei der ersten Schaltungen (13) so geschaltet sind, dass dasselbe Potential zwischen der Masse und jeder Elektrode (7) angelegt wird.

13. Matrix von optischen Filtern nach einem der Ansprüche 11 bis 12, bei der wenigstens eine erste elektrische Schaltung (13) so ausgelegt ist, dass sie ein Potential unabhängig von den anderen ersten elektrischen Schaltungen (13) an wenigstens eine Elektrode (7) anlegt.

14. Fotodetektor mit p-n-Übergang (21), umfassend ein Filter nach einem der Ansprüche 1 bis 10, wobei das Filter auf einer Schicht angeordnet ist, ausgewählt aus einer n-dotierten Schicht und einer p-dotierten Schicht des p-n-Übergangs.

15. Fotodetektor (15), umfassend ein optisches Filter nach einem der vorherigen Ansprüche, wobei das Material der Schicht mit elektrisch justierbarem optischem Index (5) leitend ist.

16. Fotodetektor nach dem vorherigen Anspruch, der eine zweite elektrische Schaltung (9) umfasst, von der zwei Anschlüsse mit der Schicht mit elektrisch justierbarem Index (5) verbunden sind, wobei die zweite elektrische Schaltung (9) zum Erkennen von Variationen von elektrischem Strom an den Anschlüssen ausgelegt ist.

17. Matrix der Fotodetektoren (15) nach einem der Ansprüche 14 bis 16.

18. Fotodetektormatrix (15) nach dem vorherigen Anspruch, bei der wenigstens zwei der ersten Schaltungen (13) so geschaltet sind, dass sie dasselbe Potential zwischen der Masse und jeder Elektrode (7) anlegen.

19. Fotodetektormatrix (15) nach einem der Ansprüche 17 und 18, bei der wenigstens eine erste elektrische Schaltung (13) zum Anlegen eines von den anderen ersten elektrischen Schaltungen (13) unabhängigen Potentials an wenigstens eine Elektrode (7) ausgelegt ist.

20. Verfahren zur Herstellung einer Vorrichtung nach einem der vorherigen Ansprüche, das wenigstens die folgenden Schritte beinhaltet:
a) Ausschalen wenigstens einer Halbleitermaterialschicht, die auf einer zweiten elektrisch isolierenden Schicht (3) angeordnet ist;
b) Absetzen einer Schicht mit elektrisch justierbarem optischem Index (5) auf die halbleitenden und isolierenden Materialien.

21. Verfahren nach dem vorherigen Anspruch, das einen Anfangsschritt beinhaltet, bestehend im Ätzen von Strukturen (11) auf der Schicht von wenigstens einem Halbleitermaterial, wobei die Strukturen (11) räumlich die Bildung der Nano-/Mikropartikel (1) in Schritt a) regulieren.

22. Verfahren nach einem der Ansprüche 20 und 21, bei dem wenigstens eine Halbleitermaterialschicht mit einer fokalisierten Ionensonde geätzt wird.

23. Verfahren nach einem der Ansprüche 20 bis 22, das einen Schritt beinhaltet, der im Ätzen wenigstens der Schicht mit elektrisch justierbarem Index (5) beinhaltet, um räumlich die Vorrichtungen nach einem der Ansprüche 1 bis 9 und 14 bis 16 zu definieren.

24. Verfahren zum optischen Filtern durch eine Vorrichtung nach einem der Ansprüche 1 bis 19, wobei das Verfahren wenigstens einen Schritt umfasst, bestehend im Justieren der Resonanzwellenlänge der Nano-/Mikropartikel (1) und zum Regeln des Potentials am Anschluss der Elektrode (7).

## Claims

1. An electrically tunable optical filter (14) comprising:
a plurality of semi-conducting or dielectric nano-/microparticles, exhibiting properties of electromagnetic resonance in the optical and near-infrared domain, arranged on a plane (22), **characterized in that** it further comprises:
a layer with electrically adjustable optical index (5) covering the surface formed by said nano-/microparticles (1) and said plane (22);
a first electrically insulating layer (8) disposed on said layer with electrically adjustable optical index (5) and
an electrode (7) disposed on said first electrically insulating layer,
a conducting substrate (2) or a conducting layer disposed on the side of said plane (22) opposite said electrode,
a first electrical circuit (13) connected on the one hand to said electrode and on the other hand to said conducting layer or conducting substrate, and configured to apply potential difference and to fix a controlled electrical field in the filter (14).

2. The filter as claimed in claim 1, wherein the dielectric nano-/microparticles have an optical index of more than 2,5.

3. The filter as claimed in any of the preceding claims, comprising a second electrically insulating layer (3) a face of which coincides with said plane (22), said second electrically insulating layer being in contact with said nano-/microparticles (1) and the layer with electrically adjustable optical index (5).

4. The filter as claimed in any of claims 1 to 3, in which at least one said nano-/microparticle (1) comprises a semi-conducting core (19) and a semi-conducting shell (20) whose electrical properties are different and suitable for forming at least one junction chosen from among an anisotype homojunction, an isotype heterojunction and an anisotype heterojunction.

5. The filter as claimed in any of the preceding claims, comprising at least one shell of electrically insulating material (18) in which at least one said nano-/microparticle (1) is surrounded, at least partially, by a said shell of electrically insulating material (18).

6. The optical filter as claimed in the preceding claim, in which at least one material of said layer with electrically adjustable optical index (5) is an organic material.

7. The optical filter as claimed in claim 1, in which the material of said layer with electrically adjustable optical index is chosen at least from among poly(3,4-ethylenedioxythiophene), sodium polystyrene sulfonate, indium-tin oxide, zinc-aluminum oxide, poly(4,4-dioctylcyclopentadithiophene), poly(methyl methacrylate) and networks of carbon nanotubes.

8. The optical filter as claimed in any of the preceding claims, the size and the material of said nano-/microparticles (1) of which are suitable for allowing a resonance of said nano-/microparticles (1) for excitation wavelengths of between 300 nm and 2.5 µm.

9. The optical filter as claimed in any of the preceding claims, wherein the first electrical circuit (13) is suitable on the one hand to apply a ground potential to said conducting layer or said conducting substrate and on the other hand to apply a fixed or stationary potential suitable for the polarization of said layer with electrically adjustable optical index (5).

10. The optical filter as claimed in any of claims 2 to 9, in which the optical index of the material of said second electrically insulating layer (3) is strictly less than the optical index of the material of said nano-/microparticles (1) and in which said nano-/microparticles (1) are substantially hemispherical, the plane part of the hemispheres formed by said nano-/microparticles (1) coinciding with said plane (22).

11. A matrix (10) of optical filters as claimed as claimed in any of claims 1 to 10.

12. The matrix of optical filters as claimed in claim 11, wherein at least two of the first circuits (13) are connected so as to impose the same potential between said ground and each said electrode (7).

13. The matrix of optical filters as claimed in any of claims 11 to 12, in which at least one said first electrical circuit (13) is suitable for imposing a potential independent of said other first electrical circuits (13), on at least one said electrode (7).

14. A photodetector with p-n junction (21), comprising a filter as claimed in any of claims 1 to 10, whose said filter is disposed on a layer chosen from among an n-doped layer and a p-doped layer of said p-n junction.

15. A photodetector (15) comprising an optical filter as claimed in any of the preceding claims, which material of said layer with electrically adjustable optical index (5) is conducting.

16. The photodetector as claimed in in the preceding claim, comprising a second electrical circuit (9), two terminals of which are connected to said layer with electrically adjustable index (5), said second electrical circuit (9) being suitable for detecting variations of electric current at said terminals.

17. A matrix of said photodetectors (15) as claimed in any of claims 14 to 16.

18. The matrix of photodetectors (15) as claimed in the preceding claim, in which at least two said first circuits (13) are connected so as to impose the same potential between said ground and each said electrode (7).

19. The matrix of photodetectors (15) as claimed in claimed in any of claims 17 and 18, in which at least one said first electrical circuit (13) is suitable for imposing a potential independent of said other first electrical circuits (13), on at least one said electrode (7).

20. A method for the fabrication of a filter as claimed in of the preceding claims, comprising at least the following steps:
a) dewetting of at least one semi-conducting material layer previously deposited on a said second electrically insulating layer (3);
b) deposition of a said layer with electrically adjustable optical index (5) on said semi-conducting and insulating materials.

21. The method as claimed in the preceding claim, comprising an initial step of etching patterns (11) on said layer of at least one said semi-conducting material, said patterns (11) spatially controlling the formation of said nano-/microparticles (1) during step a).

22. The method as claimed in any of claims 20 and 21, in which at least one said semi-conducting material layer is etched with a focused ion probe.

23. The method as claimed in any of the claims 20 to 22, comprising the step of etching at least said layer with electrically adjustable index (5) so as to spatially define said devices as claimed in any of claims 1 to 9 and 14 to 16.

24. A method of optical filtering by a filter as claimed in any of claims 1 to 19, said method comprising at least a step of adjusting the resonance wavelength of said nano-/microparticles (1) by driving the potential on the terminal of said electrode (7).
